# EUROPÄISCHE PATENTSCHRIFT

(11) **EP 0 476 648 B1**
(45) Veröffentlichungstag und Bekanntmachung des Hinweises auf die Patenterteilung: **21.06.1995**
(21) Anmeldenummer: 91115934.1
(22) Anmeldetag: 19.09.1991
(51) Int. Cl.: C08F 26/02, C08F 30/06, C08F 8/42

(54) **Polymere Ammoniumborate und Verfahren zu ihrer Herstellung**
Polymeric ammonium borates and process for their preparation
Borates d'ammonium polymères et procédé pour leur préparation

(30) Priorität: 19.09.1990 DE 4029652
(43) Veröffentlichungstag der Anmeldung: 25.03.1992
(73) Patentinhaber: HOECHST AKTIENGESELLSCHAFT, 65926 Frankfurt am Main (DE)
(72) Erfinder: Gitzel, Jörg, Dr., W-6273 Waldems (DE); Wehle, Detlef, Dr., W-6272 Niedernhausen (DE); Macholdt, Hans-Tobias, Dr., W-6100 Darmstadt (DE)

(56) Entgegenhaltungen:
- US-A- 4 452 957
- US-A- 4 937 294

## Beschreibung

Gegenstand der vorliegenden Erfindung sind polymere Ammoniumborate auf der Basis von homo- oder copolymeren Poly(diallylammonium)-Derivaten sowie Copolymere von Poly(diallylammonium)-Derivaten mit ausgewählten Vinylverbindungen. Die vorliegende Erfindung betrifft im einzelnen neue polymere Ammoniumborate mit einem Molekulargewicht von 5000 bis 500000 auf der Basis von Poly(diallylammonium)-Derivaten oder deren Copolymeren, mit den molaren Monomerenverhältnissen (I):(II) und (I):(III) und (II):(III) von 0,5:0,5 bis 0,95:0,05 im Copolymeren, hergestellt durch Homopolymerisation von Monomeren der allgemeinen Formeln (I) oder (II) sowie durch Copolymerisation von Gemischen zweier Monomerer der allgemeinen Formeln (I) bis (III) und gegebenenfalls anschließendem Anionenaustausch 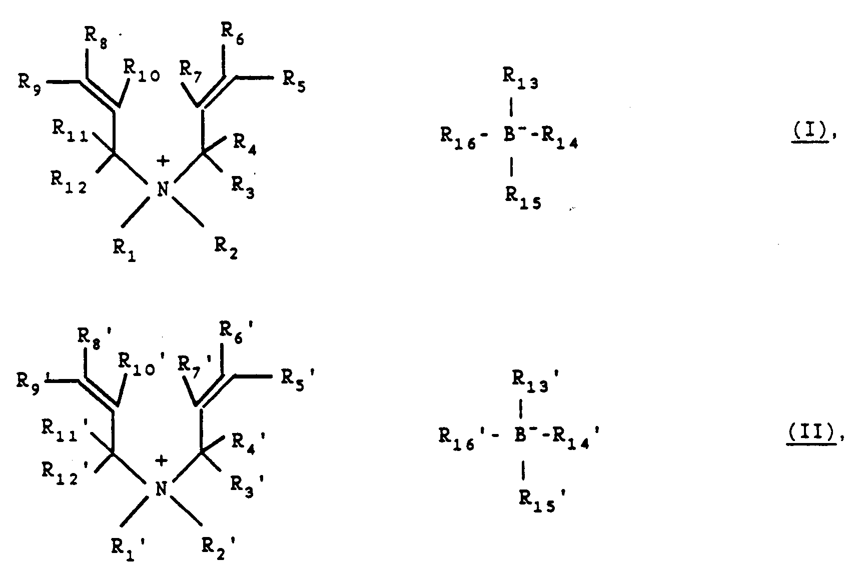 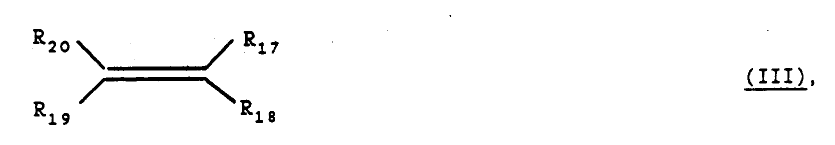
wobei die Reste **R**₁ **bis R**₁₆ **und R**₁**' bis R**₁₆**'** unabhängig voneinander jeweils ein Wasserstoffatom, Halogenatom, einen Hydroxyl-Rest, einen primären, sekundären oder tertiären Amino-Rest, einen Carbonsäure- oder Carbonsäureester-Rest, einen Sulfonsäure- oder Sulfonsäureester-Rest, einen Cyano- oder Nitro-Rest oder jeweils einen Rest auf Basis eines Kohlenwasserstoffes, der durch Heteroatome unterbrochen sein kann, bedeuten, und die Reste **R**₁₇ **bis R**₂₀ unabhängig voneinander jeweils ein Wasserstoffatom, Chloratom, Bromatom, einen Hydroxyl-Rest, einen primären, sekundären oder tertiären Amino-Rest, einen Carbonsäure- oder Carbonsäureester-Rest, einen Sulfonsäure- oder Sulfonsäureester-Rest, einen Cyano- oder Nitro-Rest oder jeweils einen Rest auf Basis eines Kohlenwasserstoffes, der durch Heteroatome unterbrochen sein kann, bedeuten,
wobei **R**₁ **und R**₂ **bzw. R**₁**' und R**₂**'** unabhängig voneinander Wasserstoffatome, geradkettige oder verzweigte, gesättigte oder ungesättigte Alkyl(C₁-C₁₈)- oder Alkoxy(C₁-C₁₈)-Reste, Polyoxalkylen-Reste, bevorzugt Polyoxethylen- und Polyoxpropylen-Reste, der allgemeinen Formel -(Alkylen(C₁-C₅)-O)ₙ-R, worin R ein Wasserstoffatom, einen Alkyl(C₁-C₄)-Rest oder einen Acyl-Rest, wie beispielsweise den Acetyl-, Benzoyl- oder Naphthoyl-Rest, und n eine Zahl von 1 bis 10 ist, Aryl- oder Heteroarylreste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexylreste, bedeuten, und sich R₁ und R₂ bzw. R₁' und R₂' auch zu einem gesättigten oder ungesättigten, aromatischen oder nichtaromatischen 5 bis 7-gliedrigen Ringsystem zusammenschließen können, wie beispielsweise das Pyridinium-Ringsystem, das weitere Heteroatome, bevorzugt Stickstoff- und/oder Sauerstoff- und/oder Schwefelatome, enthalten kann, wie beispielsweise das Morpholinium-Ringsystem, sowie substituiert und/oder durch Ankondensation von oder Verbrückung zu weiteren Ringsystemen modifiziert sein kann, wie beispielsweise das Chinolinium-Ringsystem, wobei die Reste R₁ und R₂ bzw. R₁' und R₂' ein oder mehrere Heteroatome, wie beispielsweise Stickstoff- und/oder Sauerstoff- und/oder Schwefel- und/oder Phosphoratome, enthalten und durch Halogenatome, Hydroxyl-, Carboxyl-, Sulfonsäure-, Cyano-, Mercapto-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), Urethan-Reste, wie beipielsweise -NH-C(O)O-Alkyl(C₁-C₄), Keto-Reste, wie beipielsweise -C(O)-Alkyl(C₁-C₄), primäre, sekundäre oder teriäre Amino-Reste, wie beispielsweise -NH[Alkyl(C₁-C₄)], -N[Alkyl(C₁-C₄)]₂, Nitro-Reste, Ether-Reste, wie beipielsweise -Alkylen(C₁-C₄)-O-Alkyl(C₁-C₄), Alkyl(C₁-C₃₀)-, Alkoxy(C₁-C₃₀)-, Aroxy-Reste, wie beispielsweise Phenoxy-Reste, Halogenalkyl(C₁₋C₃₀)-, Halogenalkoxy(C₁-C₃₀)-Reste oder Ester-Reste, wie beipielsweise -C(O)O-Alkyl(C₁-C₄), substituiert sein können, und die Reste **R**₃ **bis R**₁**₂ bzw. R**₃**' bis R**₁₂**'** unabhängig voneinander Wasserstoffatome, Halogenatome, geradkettige oder verzweigte, gesättigte oder ungesättigte Alkyl(C₁-C₁₈)- oder Alkoxy(C₁-C₁₈)-Reste, Polyoxalkylen-Reste, bevorzugt Polyoxethylen- und Polyoxpropylen-Reste, der allgemeinen Formel -(Alkylen(C₁-C₅)-O)ₙ-R, worin R ein Wasserstoffatom, ein Alkyl(C₁-C₄)-Rest oder ein Acyl-Rest, wie beispielsweise der Acetyl-, Benzoyl- oder Naphthoyl-Rest, und n eine Zahl von 1 bis 10 ist, Aryl- oder Heteroarylreste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Aroxy-Reste, wie beispielsweise Phenoxy-Reste, Alkaryl-Reste, wie beispielsweise Benzyl-Reste, oder Cycloalkyl-Reste, wie beispielsweise Cyclopentyl- oder Cyclohexylreste, bedeuten, und sich zwei der Reste R₃ bis R₁₂ bzw. R₃' bis R₁₂' auch zu einem gesättigten oder ungesättigten, aromatischen oder nichtaromatischen 5 bis 7-gliedrigen Ringsystem zusammenschließen können, wie beispielsweise das Pyridinium-Ringsystem, das weitere Heteroatome, bevorzugt Stickstoff- und/oder Sauerstoff- und/oder Schwefelatome, enthalten kann, wie beispielsweise das Morpholinium-Ringsystem, sowie substituiert und/oder durch Ankondensation von oder Verbrückung zu weiteren Ringsystemen modifiziert sein kann, wie beispielsweise das Chinolinium-Ringsystem, wobei die Reste R₃ bis R₁₂ bzw. R₃' bis R₁₂' ein oder mehrere Heteroatome, wie beispielsweise Stickstoff- und/oder Sauerstoff- und/oder Schwefel- und/oder Phosphoratome, enthalten und durch Halogenatome, Hydroxyl-, Carboxyl-, Sulfonsäure-, Cyano-, Mercapto-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), Urethan-Reste, wie beipielsweise -NH-C(O)O-Alkyl(C₁-C₄), Keto-Reste, wie beipielsweise -C(O)-Alkyl(C₁-C₄), primäre, sekundäre oder teriäre Amino-Reste, wie beispielsweise -NH[Alkyl(C₁-C₄)], -N[Alkyl(C₁-C₄)]₂, Nitro-Reste, Ether-Reste, wie beipielsweise -Alkylen(C₁-C₄)-O-Alkyl(C₁-C₄), Alkyl(C₁-C₃₀)-, Alkoxy(C₁-C₃₀)-, Aroxy-Reste, wie beispielsweise Phenoxy-Reste, Halogenalkyl(C₁-C₃₀)-, Halogenalkoxy(C₁-C₃₀)-Reste oder Ester-Reste, wie beipielsweise -C(O)O-Alkyl(C₁-C₄), substituiert sein können, und die Reste **R**₁₃ **bis R**₁₆ **bzw. R**₁₃**' bis R**₁₆**'** am Borat-Anion unabhängig voneinander aliphatische, cylcoaliphatische Reste, Aryl- oder Heteroaryl- oder Aralkylreste, wobei diese Reste durch Alkyl(C₁-C₄)-, Alkoxy(C₁-C₄)-, Arylreste oder Halogenatome substituiert sein können, oder Fluoratome bedeuten,
und die Reste **R**₁₇ **bis R**₂₀ unabhängig voneinander Wasserstoffatome, Chloratome, Bromatome, geradkettige oder verzweigte, gesättigte oder ungesättigte Alkyl(C₁-C₃₀)-Reste, Polyoxalkylen-Reste, bevorzugt Polyoxethylen- und Polyoxpropylen-Reste, der allgemeinen Formel -(Alkylen(C₁-C₅)-O)ₙ-R, worin R ein Wasserstoffatom, ein Alkyl(C₁-C₄)-Rest oder ein Acyl-Rest, wie beispielsweise der Acetyl-, Benzoyl- oder Naphthoyl-Rest, und n eine Zahl von 1 bis 10 ist, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexyl-Reste, Carboxyl-, Sulfonsäure-, Cyano-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), Ester-Reste, wie beipielsweise -CO(O)-Alkyl(C₁-C₄), Carboxylat-Reste, wie beipielsweise -O-C(O)-Alkyl(C₁-C₄), Keto-Reste, wie beipielsweise -C(O)-Alkyl(C₁-C₄), Lactam-Reste, wie beispielsweise 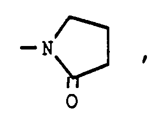
oder Ether-Reste, wie beipielsweise -Alkylen(C₁-C₄)-O-Alkyl(C₁-C₄), bedeuten, wobei die Reste R₁₇ bis R₂₀ ein oder mehrere Heteroatome, wie beispielsweise Stickstoff- und/oder Sauerstoff- und/oder Schwefel- und/oder Phosphoratome, enthalten und durch Chlor- oder Bromatome, Hydroxyl-, Carboxyl-, Sulfonsäure-, Cyano-, Mercapto-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), primäre, sekundäre oder teriäre Amino-Reste, wie beispielsweise -NH[Alkyl(C₁-C₄)], -N[Alkyl(C₁-C₄)]₂ oder Nitro-Reste substituiert sein können,
und wobei im Falle der Homopolymerisation von Monomeren der allgemeinen Formeln (I) oder (II) **R**₁ **und R**₂ **und/oder R**₁**' und R**₂**'** identisch oder verschieden sein können, und wobei im Falle der Copolymerisation von Gemischen zweier Monomerer der Formeln (I) bis (III) sowohl die Reste **R**₁ **und R**₂ **und/oder R**₁**' und R**₂**'** als auch die **Borat-Anionen** identisch oder verschieden sein können, sowie Gemische dieser Verbindungen.

Die Erfindung betrifft insbesondere polymere Ammoniumborate mit einem Molekulargewicht von 20000 bis 250000 auf der Basis von Poly(diallylammonium)-Derivaten sowie deren Copolymeren, mit den molaren Monomerenverhältnissen (I):(II) und (I):(III) und (II):(III) von 0,5:0,5 bis 0,95:0,05 im Copolymeren, hergestellt durch Homopolymerisation von Monomeren der oben genannten Formeln (I) oder (II) sowie durch Copolymerisation von Gemischen zweier Monomerer der oben genannten Formeln (I) bis (III) mit gegebenenfalls anschließendem Anionenaustausch,
in denen **R**₁ **und R**₂ **bzw. R**₁**' und R**₂**'** unabhängig voneinander Wasserstoffatome, geradkettige oder verzweigte, gesättigte oder ungesättigte Alkyl(C₁-C₈)- oder Alkoxy(C₁-C₈)-Reste, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexylreste, bedeuten, wobei die Reste R₁ und R₂ bzw. R₁' und R₂' durch Halogenatome, Hydroxyl-, Carboxyl-, Sulfonsäure-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), Keto-Reste, wie beipielsweise -C(O)-Alkyl(C₁-C₄), primäre, sekundäre oder teriäre Amino-Reste, wie beispielsweise -NH[Alkyl(C₁-C₄)], -N[Alkyl(C₁-C₄)]₂, Nitro-Reste, Ether-Reste, wie beipielsweise -Alkylen(C₁-C₄)-O-Alkyl(C₁-C₄), Alkyl(C₁-C₄)-, Alkoxy(C₁-C₄)-, Aroxy-Reste, wie beispielsweise Phenoxy-Reste, Halogenalkyl(C₁-C₄)-, Halogenalkoxy(C₁-C₄)-Reste oder Ester-Reste, wie beipielsweise -C(O)O-Alkyl(C₁-C₄), substituiert sein können,
und die Reste **R**₃ **bis R**₁₂ **bzw. R**₃**' bis R**₁₂**'** unabhängig voneinander Wasserstoffatome, Halogenatome, geradkettige oder verzweigte, gesättigte oder ungesättigte Alkyl(C₁-C₈)- oder Alkoxy(C₁-C₈)-Reste, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Aroxy-Reste, wie beispielsweise Phenoxy-Reste, Alkaryl-Reste, wie beispielsweise Benzyl-Reste, oder Cycloalkyl-Reste, wie beispielsweise Cyclopentyl- oder Cyclohexylreste, bedeuten, wobei die Reste **R**₃ **bis R**₁₂ **bzw. R**₃**' bis R**₁₂**'** durch Halogenatome, Hydroxyl-, Carboxyl-, Sulfonsäure-Reste, Carboxamid-Reste, wie beispielsweise -NH-C(O)-Alkyl(C₁-C₄), Sulfonamid-Reste, wie beispielsweise -NH-SO₂-Alkyl(C₁-C₄), Keto-Reste, wie beipielsweise -C(O)-Alkyl(C₁-C₄), primäre, sekundäre oder teriäre Amino-Reste, wie beispielsweise -NH[Alkyl(C₁-C₄)], -N[Alkyl(C₁-C₄)]₂, Nitro-Reste, Ether-Reste, wie beipielsweise -Alkylen(C₁-C₄)-O-Alkyl(C₁-C₄), Alkyl(C₁-C₄)-, Alkoxy(C₁-C₄)-, Aroxy-Reste, wie beispielsweise Phenoxy-Reste, Halogenalkyl(C₁-C₄)-, Halogenalkoxy(C₁-C₄)-Reste oder Ester-Reste, wie beipielsweise -C(O)O-Alkyl(C₁-C₄), substituiert sein können, und die Reste **R**₁₃ **bis R**₁₆ **bzw. R**₁₃**' bis R**₁₆**'** Phenyl-, Naphthyl-, Fluorphenyl-, Chlorphenyl-, Methoxyphenyl-, Biphenyl-, Pyridyl-, Tolylreste oder Fluoratome bedeuten, und die Reste **R**₁₇ **bis R**₂₀ unabhängig voneinander Wasserstoffatome, geradkettige oder verzweigte, gesättigte oder ungesättigte Alkyl(C₁-C₈)-Reste, Aryl- oder Heteroaryl-Reste, wie beipielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, Cycloalkyl-Reste, wie beispielsweise Cyclopentyl- oder Cyclohexylreste, Carboxyl-, Sulfonsäure-, Cyano-Reste, Ester-Reste, wie beipielsweise -C(O)O-Alkyl(C₁-C₄), Carboxylat-Reste, wie beipielsweise -O-C(O)-Alkyl(C₁-C₄), Carboxamid-Reste, wie beispielsweise -NH-C(O)-Alkyl(C₁-C₄), Sulfonamid-Reste, wie beispielsweise -NH-SO₂-Alkyl(C₁-C₄), Keto-Reste, wie beipielsweise -C(O)-Alkyl(C₁-C₄), Lactam-Reste, wie beispielsweise 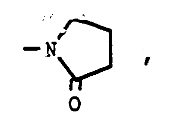
oder Ether-Reste, wie beipielsweise -Alkylen(C₁-C₄)-O-Alkyl(C₁-C₄), bedeuten, wobei die Reste R₁₇ bis R₂₀ durch Chlor- oder Bromatome, Hydroxyl-, Carboxyl-, Sulfonsäure-, Cyano-, Mercapto-, Carboxamid-Reste wie beispielsweise -NH-C(O)-Alkyl(C₁-C₄), Sulfonamid-Reste, wie beispielsweise -NH-SO₂-Alkyl(C₁-C₄), primäre, sekundäre oder teriäre Amino-Reste, wie beispielsweise -NH[Alkyl(C₁-C₄)], -N[Alkyl(C₁-C₄)]₂ oder Nitro-Reste substituiert sein können, bedeuten, sowie Gemische dieser Verbindungen und Mischkristalle mit gemischten Anionen und/oder Kationen.

Ganz besonders geeignete Verbindungen sind beispielsweise
- Homopolymere aus 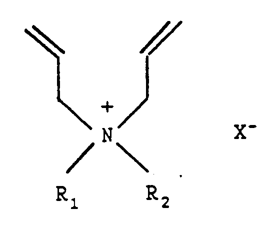 mit X⁻ = BF₄⁻, B(Phenyl)₄⁻, R₁ = H, CH₃, R₂= CH₃, C₈H₁₇ und einem Molekulargewicht von 20000 bis 250000,
- Copolymere aus 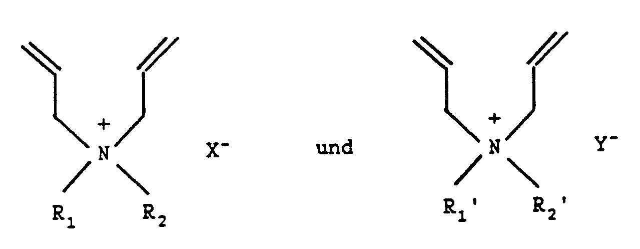 mit X⁻ und Y⁻ = BF₄⁻, B(Phenyl)₄⁻, R₁ und R₁' = H, CH₃, R₂ und R₂' = CH₃, C₈H₁₇, einem Molekulargewicht von 20000 bis 250000 und einem molaren Monomerenverhältnis im Copolymeren von 0,5:0,5 bis 0,95:0,05,
- Copolymere aus 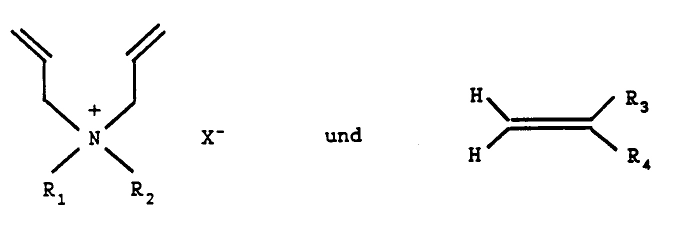 mit X⁻ und Y⁻ = BF₄⁻, B(Phenyl)₄⁻, R₁ = H, CH₃, R₂ = CH₃, C₈H₁₇, R₃ = H, CH₃, R₄ = COOH, C(O)OCH₃, C(O)OC₂H₅, C(O)NH₂, OC(O)CH₃, CN, einem Molekulargewicht von 20000 bis 250000 und einem molaren Monomerenverhältnis im Copolymeren von 0,5:0,5 bis 0,95:0,05.

An Einzelverbindungen seien beispielsweise genannt
- ein Homopolymeres aus 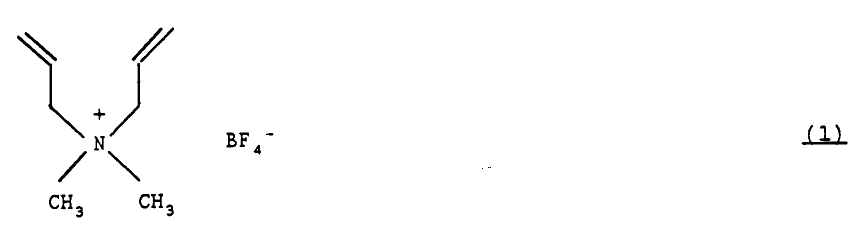 mit einem Molekulargewicht von etwa 100000,
- ein Homopolymeres aus 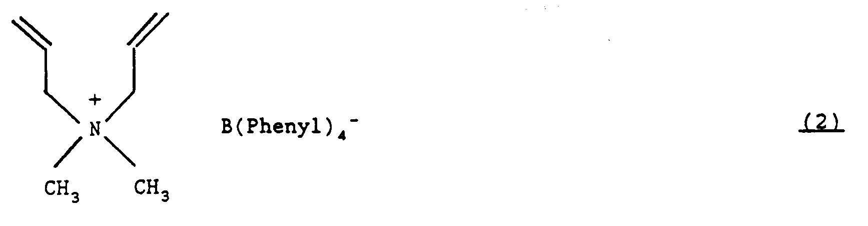 mit einem Molekulargewicht von etwa 100000,
- ein Homopolymeres aus 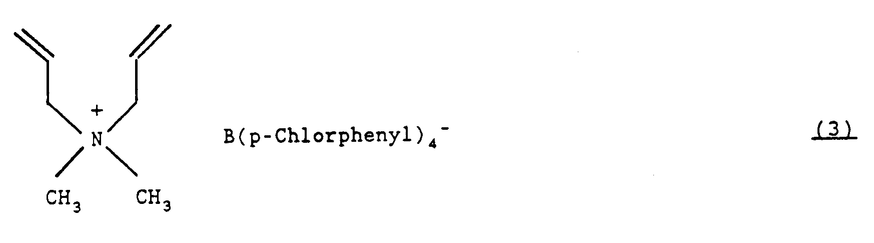 mit einem Molekulargewicht von etwa 100000,
- ein Copolymeres aus 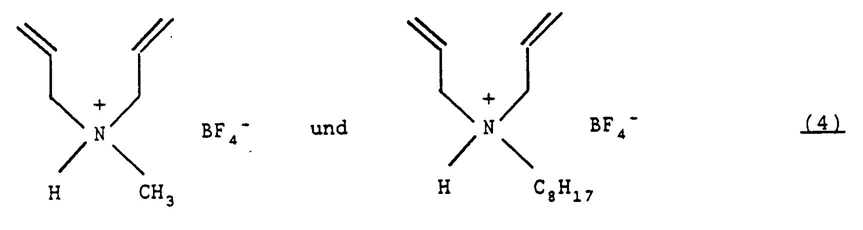 mit einem Molekulargewicht von etwa 100000 und einem molaren Monomerenverhältnis im Copolymeren von 0,8:0,2,
- ein Copolymeres aus 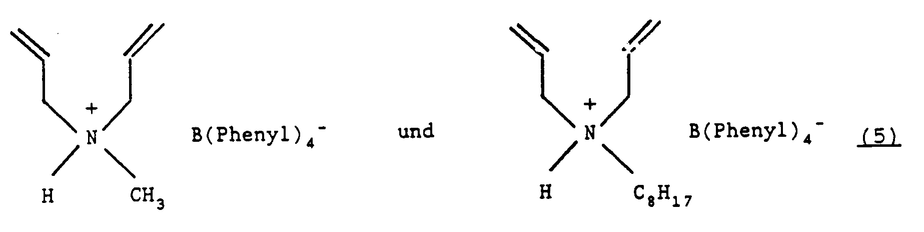 mit einem Molekulargewicht von etwa 100000 und einem molaren Monomerenverhältnis im Copolymeren von 0,8:0,2,
- ein Copolymeres aus 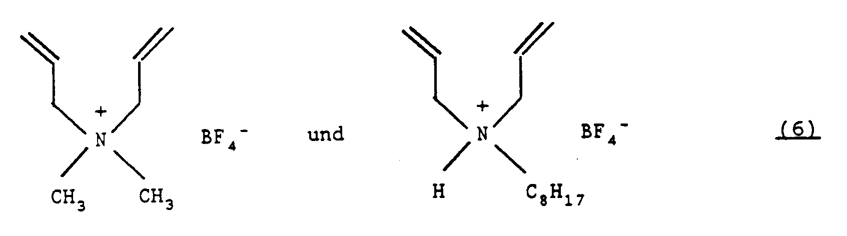 mit einem Molekulargewicht von etwa 100000 und einem molaren Monomerenverhältnis im Copolymeren von 0,8:0,2,
- ein Copolymeres aus 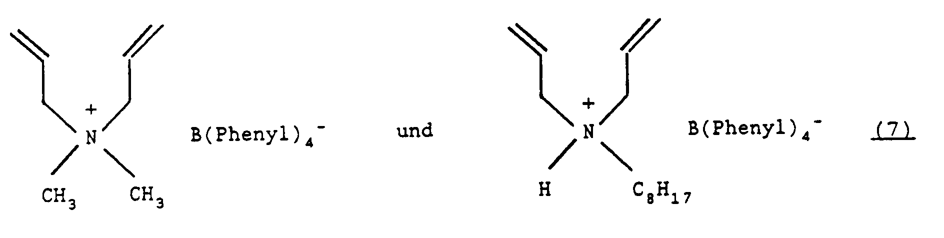 mit einem Molekulargewicht von etwa 100000 und einem molaren Monomerenverhältnis im Copolymeren von 0,8:0,2,
- ein Copolymeres aus 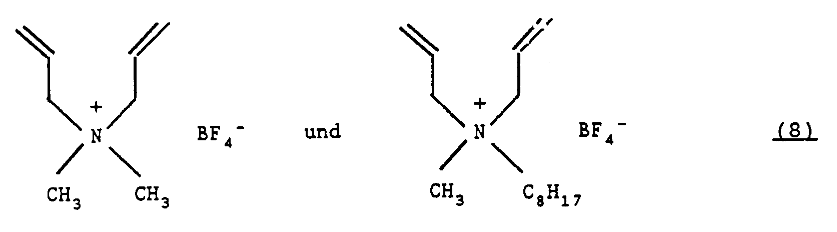 mit einem Molekulargewicht von etwa 100000 und einem molaren Monomerenverhältnis im Copolymeren von 0,95:0,05,
- ein Copolymeres aus 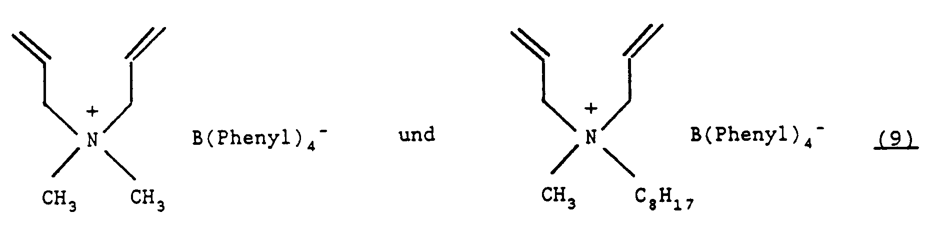 mit einem Molekulargewicht von etwa 100000 und einem molaren Monomerenverhältnis im Copolymeren von 0,95:0,05,
- ein Copolymeres aus 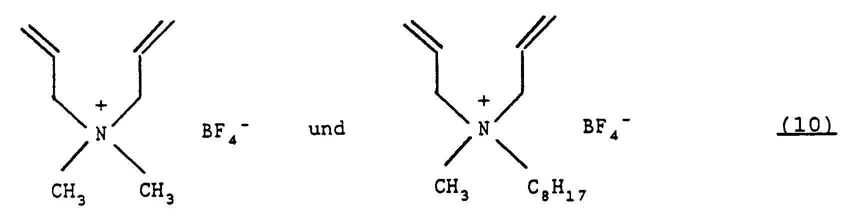 mit einem Molekulargewicht von etwa 100000 und einem molaren Monomerenverhältnis im Copolymeren von 0,8:0,2,
- ein Copolymeres aus 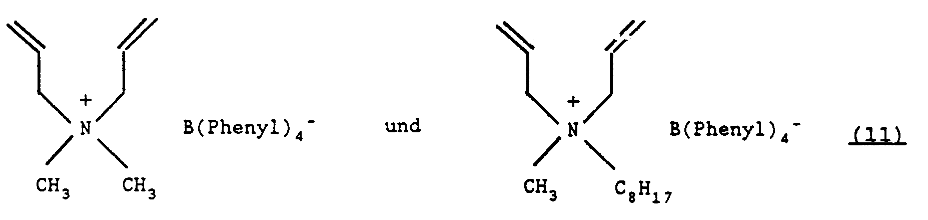 mit einem Molekulargewicht von etwa 100000 und einem molaren Monomerenverhältnis im Copolymeren von 0,8:0,2,
- ein Copolymeres aus 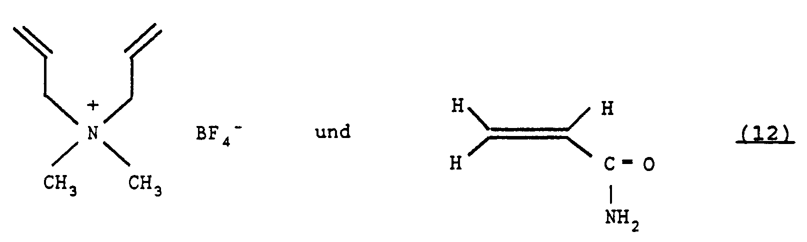 mit einem Molekulargewicht von etwa 100000 und einem molaren Monomerenverhältnis im Copolymeren von 0,8:0,2,
- ein Copolymeres aus 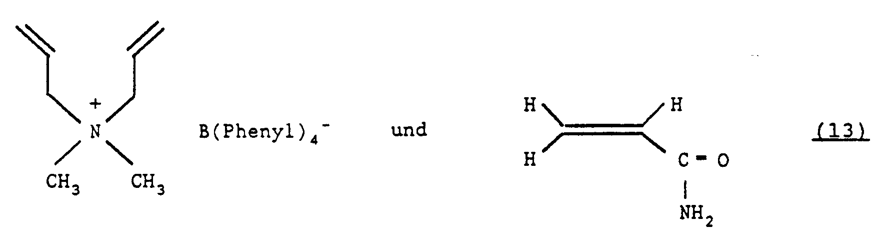 mit einem Molekulargewicht von etwa 100000 und einem molaren Monomerenverhältnis im Copolymeren von 0,8:0,2.

Die Herstellung der Verbindungen der allgemeinen Formeln (I) bis (III) und deren Homo- bzw. Copolymerisate geschieht durch Homopolymerisation von Monomeren der allgemeinen Formeln (IV) oder (V) sowie durch Copolymerisation von Gemischen zweier Monomerer der allgemeinen Formeln (IV) bis (VI) 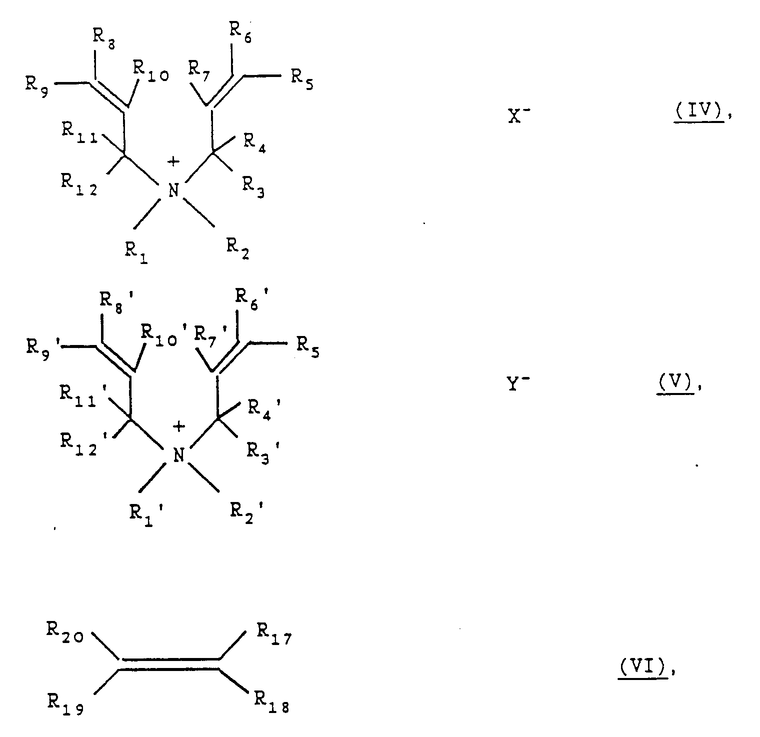
wobei die Reste **R**₁ **bis R**₁₂**, R**₁**' bis R**₁₂**' und R**₁₇ **bis R**₂₀ in den allgemeinen Formeln (IV) bis (VI) die für die allgemeinen Formeln (I) bis (III) genannten Bedeutungen haben, und
die Anionen **X⁻ und Y⁻** Cl⁻, Br⁻, J⁻, CH₃OSO₃⁻ oder C₂H₅OSO₃-bedeuten,
und Umsetzung
mit einem oder mehreren Boratsalzen in Wasser oder Gemischen aus Wasser und organischem Lösungsmittel, z.B. einem Gemisch aus Wasser und Isopropanol, Isobutanol oder Methylisobutylketon, bei Temperaturen von 10 °C bis 90 °C.

Die Herstellung der Verbindungen der allgemeinen Formeln (IV) bis (VI) ist bekannt und in der Literatur ausführlich beschrieben [z.B. G.B. Butler, R.J. Angelo, J. Am. Chem. Soc. 79(1957), 3128-31; G.B. Butler in: E.J. Goethals, "Polymeric Amines and Ammonium Salts", Pergamon Press, 1980, 125-42; D.H. Solomon, D.G. Hawthorne, J. Macromol. Sci.-Rev. Macromol. Chem. C15(1976), 143-64; Houben-Weyl, "Methoden der Organischen Chemie", Bd. XIV/1, Thieme-Verlag, Stuttgart, 1961, 561-1182; K. Weissermel, H.-J. Arpe, "Industrielle Organische Chemie", Verlag Chemie, Weinheim, 1988, 230-51; DD-PS 127729; EP-PS 0103698; US-PS 3288770].

In US-A-4,452,957 werden monomere quartäre Diallylammoniumsalze homopolymerisiert oder mit Olefinen copolymerisiert. Als Anionen dieser polymeren Salze werden Halogenid, Sulfat, Borat, Phosphat und andere übliche anorganische Anionen genannt.

Die Verbindungen der allgemeinen Formeln (IV) und (V) werden beispielsweise durch Umsetzung von Allylhalogeniden mit N,N-Dialkylallylaminen oder durch Reduktion von Alkylnitrilen mit anschließender Umsetzung des Amins mit Allylhalogeniden und Quaternisierung des Diallylamins hergestellt. Verbindungen der allgemeinen Formel (VI) werden beispielsweise hergestellt durch Addition von Halogenwasserstoffen an Ethin, aus Ethylenchlorhydrin durch Umsetzung mit NaCN und Alkoholen, durch Veresterung von Milchsäure mit anschließender Thermolyse, durch Umsetzung von Ethen mit Essigsäure, durch Friedel-Crafts-Alkylierung von Aromaten mit anschließender Crackung, durch Ammonoxidation von Propen oder katalytische Hydrolyse von Acrylamid. Homopolymerisate von Monomeren der allgemeinen Formeln (IV) und (V) sowie Copolymerisate von Gemischen zweier Monomerer der allgemeinen Formeln (IV) bis (VI) werden hergestellt durch beipielsweise radikalische Homo- oder Copolymerisation unter Inertgas in polaren Lösemitteln, wie beispielsweise Wasser oder Dimethylformamid, mithilfe von radikalischen Startern, wie beispielsweise t-Butylhydroperoxid oder Ammoniumperoxidisulfat, wobei als Monomere bevorzugt die Halogenidsalze eingesetzt werden.

Bevorzugte Boratsalze, mit denen nach dem erfindungsgemäßen Verfahren umgesetzt wird, sind Natriumtetraphenylborat, Natriumtetra-o-fluorphenylborat, Natriumtetra-m-fluorphenylborat, Natriumtetra-p-fluorphenylborat, Natriumtetra-o-chlorphenylborat, Natriumtetra-m-chlorphenylborat, Natriumtetra-p-chlorphenylborat, Natriumtetra-o-tolylborat, Natriumtetra-m-tolylborat, Natriumtetra-p-tolylborat, Natriumtetra-1-naphthylborat, Natriumtetra-2-naphthylborat, Natriumtetra-o-methoxyphenylborat, Natriumtetra-m-methoxyphenylborat, Natriumtetra-p-methoxyphenylborat, Natriumtetra-o-biphenylborat, Natriumtetra-m-biphenylborat, Natriumtetra-p-biphenylborat, Natriumtetrabenzylborat, Natriumtetra-o-pyridylborat, Natriumtetra-m-pyridylborat, Natriumtetra-p-pyridylborat oder Natriumtetrafluoroborat.

Die Herstellung der verschiedenen Salze, beispielsweise der Verbindungen (1) bis (13), erfolgt durch Anionenaustausch mit einem Boratsalz, z.B. durch Ausfällen aus wäßrigem Medium oder Gemischen aus Wasser und organischem Lösungsmittel, wie in den Herstellungsbeispielen beschrieben.

Die erfindungsgemäßen polymeren Ammoniumborate sind hervorragend geeignet für den Einsatz als farblose Ladungssteuermittel in Tonern und Entwicklern für elektrophotographische Aufzeichnungsverfahren sowie für den Einsatz als ladungsverbesserndes Mittel in Pulvern und Lacken zur Oberflächenbeschichtung, insbesondere in triboelektrisch bzw. elektrokinetisch versprühten Pulverlacken.

Die nachstehenden Herstellungsbeispiele dienen zur Erläuterung der Erfindung, ohne diese darauf zu beschränken.

### HERSTELLUNGSBEISPIELE

### Herstellungsbeispiel 1

10 g (0,06 Mol) eines Homopolymeren aus Diallyldimethylammoniumchlorid (Molekulargewicht ca. 100000 g/Mol) werden in 200 ml Wasser gelöst, und 7,5 g (0,07 Mol) Natriumtetrafluoroborat, gelöst in 100 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.
- Ausbeute :: 12,2 g (92,4 % der Theorie) der Verbindung (1), weißes Pulver
- Schmelzpunkt :: > 300 °C (Zersetzung)

| Elementaranalyse | | | | |
|---|---|---|---|---|
| ber. | 45,1 % C, | 7,5 % H, | 6,6 % N, | 35,7 % F |
| gef. | 44,5 % C, | 7,9 % H, | 6,5 % N, | 33,4 % F |

### Herstellungsbeispiel 2

Es wird wie in Herstellungsbeispiel 1 verfahren, aber anstelle von Natriumtetrafluoroborat werden 24,0 g (0,07 Mol) Natriumtetraphenylborat, gelöst in 150 ml Wasser, verwendet.
- Ausbeute :: 27,2 g (98,7 % der Theorie) der Verbindung (2), weißes Pulver
- Schmelzpunkt :: 225 °C

| Elementaranalyse | | | | |
|---|---|---|---|---|
| ber. | 86,3 % C, | 8,1 % H, | 3,1 % N, | 2,4 % B |
| gef. | 84,2 % C, | 8,1 % H, | 3,4 % N, | 2,0 % B |

### Herstellungsbeispiel 3

10 g (0,06 Mol) eines Copolymeren aus Diallyldimethylammoniumchlorid und Diallylmethyloktylammoniumchlorid (Molekulargewicht ca. 100000 g/Mol, molares Verhältnis der Monomereinheiten im Copolymer etwa 0,8 zu 0,2) werden in 400 ml Wasser gelöst und 7,5 g (0,07 Mol) Natriumtetrafluoroborat, gelöst in 100 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.
- Ausbeute :: 12,4 g (89,9 % der Theorie) der Verbindung (6), weißes Pulver
- Schmelzpunkt :: > 300 °C (Zersetzung)

| Elementaranalyse | | | | |
|---|---|---|---|---|
| ber. | 48,0 % C, | 8,0 % H, | 6,1 % N, | 33,0 % F |
| gef. | 46,9 % C, | 8,2 % H, | 6,2 % N, | 32,7 % F |

### Herstellungsbeispiel 4

Es wird wie in Herstellungsbeispiel 3 verfahren, aber anstelle von Natriumtetrafluoroborat werden 24,0 g (0,07 Mol) Natriumtetraphenylborat, gelöst in 150 ml Wasser, verwendet.
- Ausbeute :: 26,7 g (96,3 % der Theorie) der Verbindung (7), weißes Pulver
- Schmelzpunkt :: 205-210 °C

| Elementaranalyse | | | | |
|---|---|---|---|---|
| ber. | 86,2 % C, | 8,3 % H, | 3,0 % N, | 2,4 % B |
| gef. | 85,6 % C, | 8,4 % H, | 3,3 % N, | 2,2 % B |

### Herstellungsbeispiel 5

10 g (0,06 Mol) eines Copolymeren aus Diallyldimethylammoniumchlorid und Diallylmethyloktylammoniumchlorid (Molekulargewicht ca. 100000 g/Mol, molares Verhältnis der Monomereinheiten im Copolymer etwa 0,95 zu 0,05) werden in 400 ml Wasser gelöst, und 7,5 g (0,07 Mol) Natriumtetrafluoroborat, gelöst in 100 ml Wasser, werden langsam unter Rühren bei Raumtemperatur zugetropft. Der schwach bernsteinfarbene Niederschlag wird abgesaugt, mit Wasser chloridfrei gewaschen und bei 100 °C im Vakuumschrank getrocknet.
- Ausbeute :: 9,5 g (72,0 % der Theorie) der Verbindung (8), schwach bernsteinfarbenes Pulver
- Schmelzpunkt :: 270 °C (Zersetzung)

| Elementaranalyse | | | | |
|---|---|---|---|---|
| ber. | 46,0 % C, | 7,7 % H, | 6,4 % N, | 5,0 % B |
| gef. | 45,5 % C, | 8,0 % H, | 6,7 % N, | 4,3 % B |

### Herstellungsbeispiel 6

Es wird wie in Herstellungsbeispiel 5 verfahren, aber anstelle von Natriumetetrafluoroborat werden 24,0 g(0,07 Mol) Natriumtetraphenylborat, gelöst in 150 ml Wasser, verwendet.
- Ausbeute :: 25,8 g (95,6 % der Theorie) der Verbindung (9), weißes Pulver
- Schmelzpunkt :: 240 °C

| Elementaranalyse | | | | |
|---|---|---|---|---|
| ber. | 86,3 % C, | 8,2 % H, | 3,1 % N, | 2,4 % B |
| gef. | 85,7 % C, | 8,8 % H, | 3,0 % N, | 2,2 % B |

### Herstellungsbeispiel 7

10 g (0,08 Mol) eines Copolymeren aus Diallyldimethylammoniumchlorid und Acrylamid (Molekulargewicht ca. 100000 g/Mol, molares Verhältnis der Monomereinheiten im Copolymer etwa 0,8 zu 0,2) werden in 400 ml Wasser gelöst, und 9,9 g (0,09 Mol) Natriumtetrafluoroborat, gelöst in 200 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.
- Ausbeute:: 11,6 g (78,2 % der Theorie) der Verbindung (12), weißes Pulver
- Schmelzpunkt :: > 300 °C (Zersetzung)

| Elementaranalyse | | | | |
|---|---|---|---|---|
| ber. | 45,4 % C, | 7,5 % H, | 7,6 % N, | 4,8 % B |
| gef. | 45,1 % C, | 7,7 % H, | 7,4 % N, | 4,3 % B |

### Herstellungsbeispiel 8

Es wird wie in Herstellungsbeispiel 2 verfahren, aber anstelle von Natriumtetraphenylborat werden 33,6 g (0,07 Mol) Natriumtetra-p-chlorophenylborat verwendet.
- Ausbeute :: 26,8 g (74,3 % der Theorie) der Verbindung (3), weißes Pulver
- Schmelzpunkt :: 210 °C

| Elementaranalyse | | | | |
|---|---|---|---|---|
| ber. | 65,9 % C, | 5,5 % H, | 24,4 % Cl, | 1,9 % B |
| gef. | 65,2 % C, | 5,7 % H, | 23,8 % Cl, | 1,8 % B |

## Patentansprüche

1. Polymere Ammoniumborate mit einem Molekulargewicht von 5000 bis 500000 erhalten durch Homopolymerisation von Monomeren der allgemeinen Formeln (I) oder (II) sowie durch Copolymerisation von Gemischen zweier Monomerer der allgemeinen Formeln (I) bis (III), mit den molaren Monomerenverhältnissen (I):(II) und (I):(III) und (II):(III) von 0,5:0,5 bis 0,95:0,05 im Copolymeren, und gegebenenfalls anschließendem Anionenaustausch 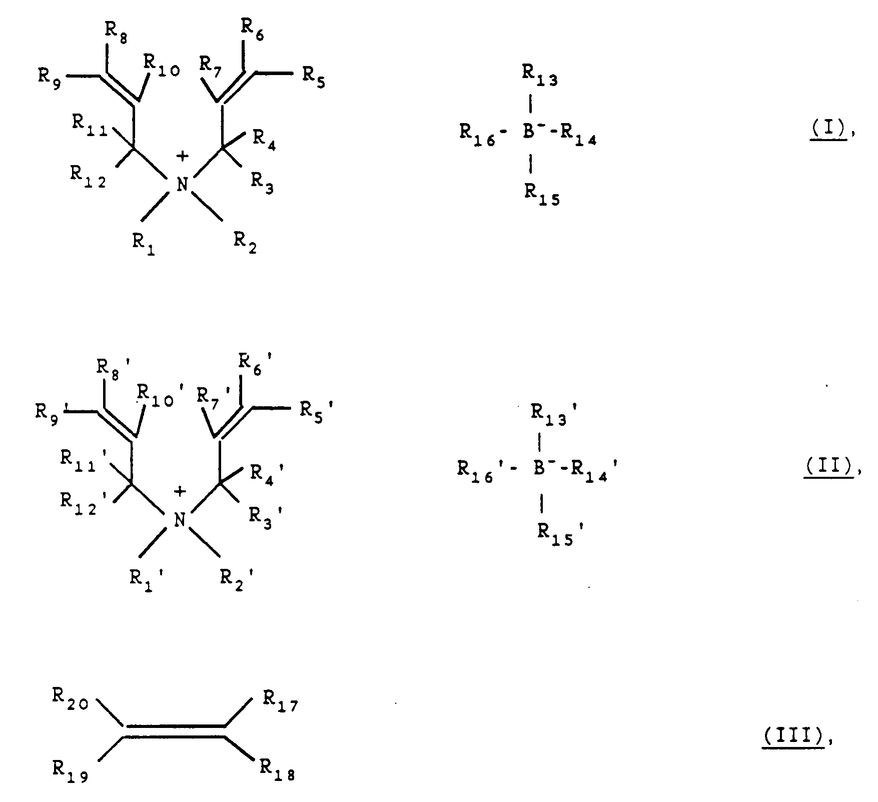 wobei die Reste **R**₁ **bis R**₁₆ **und R**₁**' bis R**₁₆**'** unabhängig voneinander jeweils ein Wasserstoffatom, Halogenatom, einen Hydroxyl-Rest, einen primären, sekundären oder tertiären Amino-Rest, einen Carbonsäure- oder Carbonsäureester-Rest, einen Sulfonsäure- oder Sulfonsäureester-Rest, einen Cyano- oder Nitro-Rest oder jeweils einen Rest auf Basis eines Kohlenwasserstoffes, der durch Heteroatome unterbrochen sein kann, bedeuten, und die Reste **R**₁₇ **bis R**₂₀ unabhängig voneinander jeweils ein Wasserstoffatom, Chloratom, Bromatom, einen Hydroxyl-Rest, einen primären, sekundären oder tertiären Amino-Rest, einen Carbonsäure- oder Carbonsäureester-Rest, einen Sulfonsäure- oder Sulfonsäureester-Rest, einen Cyano- oder Nitro-Rest oder jeweils einen Rest auf Basis eines Kohlenwasserstoffes, der durch Heteroatome unterbrochen sein kann, bedeuten, sowie Gemische dieser Verbindungen.

2. Polymere Ammoniumborate nach Anspruch 1, dadurch gekennzeichnet, daß die Reste **R**₁ **und R**₂ **bzw. R**₁**' und R**₂**'** unabhängig voneinander Wasserstoffatome, geradkettige oder verzweigte, gesättigte oder ungesättigte Alkyl(C₁-C₁₈)-, Alkoxy(C₁-C₁₈)-Reste, Polyoxalkylen-Reste der allgemeinen Formel -(Alkylen(C₁-C₅)-O)ₙ-R, worin R ein Wasserstoffatom, einen Alkyl(C₁-C₄)-Rest oder einen Acyl-Rest und n eine Zahl von 1 bis 10 ist, Aryl- oder Heteroaryl-Reste, Aralkyl-, Aralkoxy-, Alkaryl- oder Cycloalkyl-Reste bedeuten und sich R₁ und R₂ bzw. R₁' und R₂' auch zu einem gesättigten oder ungesättigten, aromatischen oder nichtaromatischen 5- bis 7-gliedrigen Ringsystem zusammenschließen können, das weitere Heteroatome enthalten sowie substituiert und/oder durch Ankondensation von oder Verbrückung zu weiteren Ringsystemen modifiziert sein kann, wobei die Reste R₁ und R₂ bzw. R₁' und R₂' ein oder mehrere Heteroatome enthalten und durch Halogenatome, Hydroxyl-, Carboxyl-, Sulfonsäure-, Cyano-, Mercapto-, Carboxamid-, Sulfonamid-, Urethan-, Keto-Reste, primäre, sekundäre oder teriäre Amino-Reste, Nitro-, Ether-, Alkyl(C₁-C₃₀)-, Alkoxy(C₁-C₃₀)-, Aroxy-, Halogenalkyl(C₁-C₃₀)-, Halogenalkoxy(C₁-C₃₀)- oder Ester-Reste substituiert sein können.

3. Polymere Ammoniumborate nach mindestens einem der Ansprüche 1 oder 2, dadurch gekennzeichnet, daß die Reste **R**₃ **bis R**₁₂ **bzw. R**₃**' bis R**₁₂**'** unabhängig voneinander Wasserstoffatome, Halogenatome, geradkettige oder verzweigte, gesättigte oder ungesättigte Alkyl(C₁-C₁₈)-, Alkoxy(C₁-C₁₈)-Reste, Polyoxalkylen-Reste der allgemeinen Formel -(Alkylen(C₁-C₅)-O)ₙ-R, worin R ein Wasserstoffatom, einen Alkyl(C₁-C₄)-Rest oder einen Acyl-Rest und n eine Zahl von 1 bis 10 ist, Aryl- oder Heteroaryl-Reste, Aralkyl-, Aralkoxy-, Aroxy-, Alkaryl- oder Cycloalkyl-Reste bedeuten, und sich zwei der Reste R₃ bis R₁₂ bzw. R₃' bis R₁₂' auch zu einem gesättigten oder ungesättigten, aromatischen oder nichtaromatischen 5- bis 7-gliedrigen Ringsystem zusammenschließen können, das weitere Heteroatome enthalten sowie substituiert und/oder durch Ankondensation von oder Verbrückung zu weiteren Ringsystemen modifiziert sein kann, wobei die Reste R₃ und R₁₂ bzw. R₃' und R₁₂' ein oder mehrere Heteroatome enthalten und durch Halogenatome, Hydroxyl-, Carboxyl-, Sulfonsäure-, Cyano-, Mercapto-, Carboxamid-, Sulfonamid-, Urethan-, Keto-Reste, primäre, sekundäre oder teriäre Amino-Reste, Nitro-, Ether-, Alkyl(C₁-C₃₀)-, Alkoxy(C₁-C₃₀)-, Aroxy-, Halogenalkyl(C₁-C₃₀)-, Halogenalkoxy(C₁-C₃₀)- oder Ester-Reste substituiert sein können.

4. Polymere Ammoniumborate nach mindestens einem der Ansprüche 1 bis 3, dadurch gekennzeichnet, daß die Reste **R**₁₃ **bis R**₁₆ **bzw. R**₁₃**' bis R**₁₆**'** am Borat-Anion unabhängig voneinander aliphatische, cylcoaliphatische Reste, Aryl- oder Heteroaryl-Reste oder Aralkylreste, wobei diese Reste durch Alkyl(C₁-C₄)-, Alkoxy(C₁-C₄)-, Arylreste oder Halogenatome substituiert sein können, oder Fluoratome bedeuten.

5. Polymere Ammoniumborate nach mindestens einem der Ansprüche 1 bis 4, dadurch gekennzeichnet, daß die **Reste R**₁₇ **bis R**₂₀ unabhängig voneinander Wasserstoffatome, Chloratome, Bromatome, geradkettige oder verzweigte, gesättigte oder ungesättigte Alkyl(C₁-C₃₀)-Reste, Polyoxalkylen-Reste der allgemeinen Formel -(Alkylen(C₁-C₅)-O)ₙ-R, worin R ein Wasserstoffatom, ein Alkyl(C₁-C₄)-Rest oder ein Acyl-Rest und n eine Zahl von 1 bis 10 ist, Aryl- oder Heteroaryl-Reste, Aralkyl-, Aralkoxy-, Alkaryl- oder Cycloalkyl-Reste, Carboxyl-, Sulfonsäure-, Cyano-, Carboxamid-, Sulfonamid-, Ester-, Carboxylat-, Keto-, Lactam- oder Ether-Reste bedeuten, wobei die Reste R₁₇ bis R₂₀ ein oder mehrere Heteroatome enthalten und durch Chlor- oder Bromatome, Hydroxyl-, Carboxyl-, Sulfonsäure-, Cyano-, Mercapto-, Carboxamid-, Sulfonamid-Reste, primäre, sekundäre oder tertiäre Amino-Reste oder Nitro-Reste substituiert sein können.

6. Polymere Ammoniumborate nach mindestens einem der Ansprüche 1 bis 5, dadurch gekennzeichnet, daß im Falle der Homopolymerisation von Monomeren der allgemeinen Formeln (I) oder (II) **R**₁ **und R**₂ **und/oder R**₁**' und R**₂**'** identisch oder verschieden sein können, und wobei im Falle der Copolymerisation von Gemischen zweier Monomerer der Formeln (I) bis (III) sowohl die Reste **R**₁ **und R**₂ **und/oder R**₁**' und R**₂**'** als auch die **Borat-Anionen** identisch oder verschieden sein können.

7. Polymere Ammoniumborate nach mindestens einem der Ansprüche 1 bis 6, dadurch gekennzeichnet, daß in den in Anspruch 1 genannten Formeln (I) bis (III)
die Reste **R₁ und R**₂ **bzw. R**₁**' und R**₂**'** unabhängig voneinander Wasserstoffatome, Alkyl(C₁-C₈)-, Cyclopentyl-, Cyclohexyl-, Phenyl-, Naphthyl-, Pyridyl-, Benzyl-, Tolyl- oder Methoxyphenyl-Reste bedeuten, wobei die genannten Reste durch Halogenatome, Hydroxyl-, Cyano-, Mercapto-Reste, primäre, sekundäre oder tertiäre Amino-Reste oder Nitro-Reste substituiert sein können,
und die Reste **R**₃ **bis R**₁₂ **bzw. R**₃**' bis R**₁₂**'** unabhängig voneinander Wasserstoffatome, Halogenatome, Alkyl(C₁-C₈)-, Cyclopentyl-, Cyclohexyl-, Phenyl-, Naphthyl-, Pyridyl-, Benzyl-, Tolyl- oder Methoxyphenyl-Reste bedeuten, wobei die genannten Reste durch Halogenatome, Hydroxyl-, Cyano-, Mercapto-Reste, primäre, sekundäre oder tertiäre Amino-Reste oder Nitro-Reste substituiert sein können,
und die Reste **R**₁₃ **bis R**₁₆ **bzw. R**₁₃**' bis R**₁₆**'** am Borat-Anion Phenyl-, Naphthyl-, Tolylreste oder Fluoratome bedeuten, und die Reste **R**₁₇ **bis R**₂₀ unabhängig voneinander Wasserstoffatome, Cyano-, Alkyl(C₁-C₈)-, Cyclopentyl-, Cyclohexyl-, Phenyl-, Naphthyl-, Pyridyl-, Benzyl-, Tolyl-Methoxyphenyl-, Carboxyl-, Sulfonsäure-, Carboxamid-, Sulfonamid-, Ester- oder Lactam-Reste bedeuten, wobei die genannten Reste durch Chlor- oder Bromatome, Hydroxyl-, Cyano-, Mercapto-Reste, primäre, sekundäre oder tertiäre Amino-Reste oder Nitro-Reste substituiert sein können.

8. Homopolymere aus 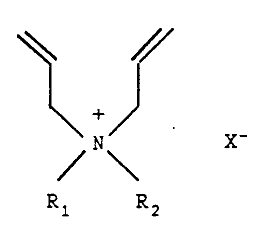 mit X⁻ = BF₄⁻, B(Phenyl)₄⁻, R₁ = H, CH₃, R₂= CH₃, C₈H₁₇ und einem Molekulargewicht von 20000 bis 250000.

9. Copolymere aus 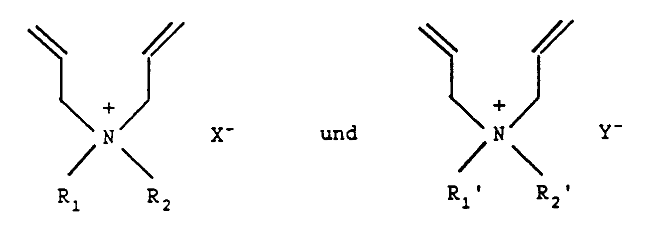 mit X⁻ und Y⁻ = BF₄⁻, B(Phenyl)₄⁻, R₁ und R₁' = H, CH₃, R₂ und R₂' = CH₃, C₈H₁₇, einem Molekulargewicht von 20000 bis 250000 und einem molaren Monomerenverhältnis im Copolymeren von 0,5:0,5 bis 0,95:0,05.

10. Copolymere aus 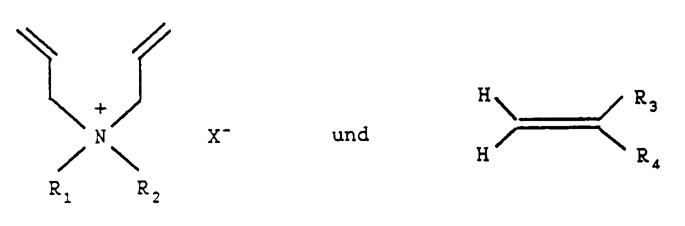 mit X⁻ und Y⁻ = BF₄⁻, B(Phenyl)₄⁻, R₁ = H, CH₃, R₂ = CH₃, C₈H₁₇, R₃ = H, CH₃, R₄ = COOH, C(O)OCH₃, C(O)OC₂H₅, C(O)NH₂, OC(O)CH₃, CN, einem Molekulargewicht von 20000 bis 250000 und einem molaren Monomerenverhältnis im Copolymeren von 0,5:0,5 bis 0,95:0,05.

11. Verfahren zur Herstellung von polymeren Ammoniumboraten nach Ansprüchen 1 bis 10. dadurch gekennzeichnet, daß man polymere Ammoniumverbindungen, erhalten durch Homopolymerisation von Monomeren der allgemeinen Formeln (IV) oder (V) sowie durch Copolymerisation von Gemischen zweier Monomerer der allgemeinen Formeln (IV) bis (VI) 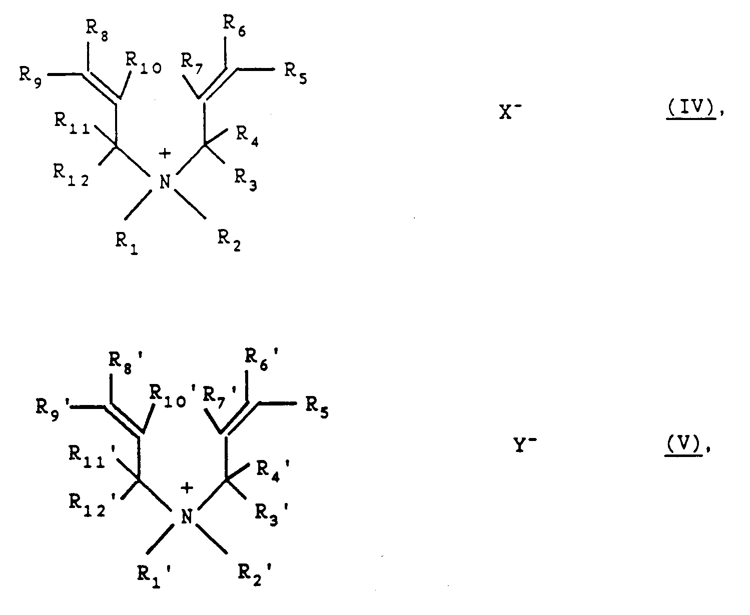 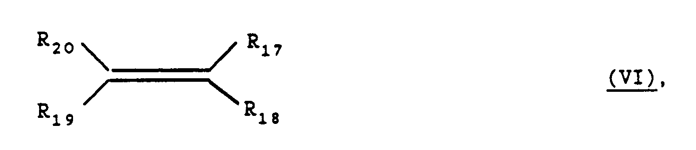 wobei die Reste **R**₁ **bis R**₁₂**, R**₁**' bis R**₁₂**' und R**₁₇ **bis R**₂₀ in den allgemeinen Formeln (IV) bis (VI) die für die allgemeinen Formeln (I) bis (III) in den Ansprüchen 1 bis 10 genannten Bedeutungen haben, und
die Anionen **X⁻ und Y⁻** Cl⁻, Br⁻, J⁻, CH₃OSO₃⁻ oder C₂H₅OSO₃-bedeuten,
mit einem oder mehreren Boratsalzen in Wasser oder Gemischen aus Wasser und organischem Lösungsmittel bei Temperaturen von 10 °C bis 90 °C umsetzt.

12. Verfahren nach Anspruch 11, dadurch gekenneichnet, daß man in einem Gemisch aus Wasser und Isopropanol, Isobutanol oder Methylisobutylketon umsetzt.

13. Verfahren nach mindestens einem der Ansprüche 11 oder 12 dadurch gekennzeichnet, daß man mit Natriumtetraphenylborat, Natriumtetra-o-fluorphenylborat, Natriumtetra-m-fluorphenylborat, Natriumtetra-p-fluorphenylborat, Natriumtetra-o-chlorphenylborat, Natriumtetra-m-chlorphenylborat, Natriumtetra-p-chlorphenylborat, Natriumtetra-o-tolylborat, Natriumtetra-m-tolylborat, Natriumtetra-p-tolylborat, Natriumtetra-1-naphthylborat, Natriumtetra-2-naphthylborat, Natriumtetra-o-methoxyphenylborat, Natriumtetra-m-methoxyphenylborat, Natriumtetra-p-methoxyphenylborat, Natriumtetra-o-biphenylborat, Natriumtetra-m-biphenylborat, Natriumtetra-p-biphenylborat, Natriumtetrabenzylborat, Natriumtetra-o-pyridylborat, Natriumtetra-m-pyridylborat, Natriumtetra-p-pyridylborat oder Natriumtetrafluoroborat umsetzt.

## Claims

1. A polymeric ammonium borate having a molecular weight of 5000 to 500,000 and obtained by homopolymerization of monomers of the formula (I) or (II) and by copolymerization of mixtures of two monomers of the formulae (I) to (III), having molar monomer ratios (I):(II) and (I):(III) and (II):(III) of 0.5:0.5 to 0.95:0.05 in the copolymer, followed, if desired, by anion exchange 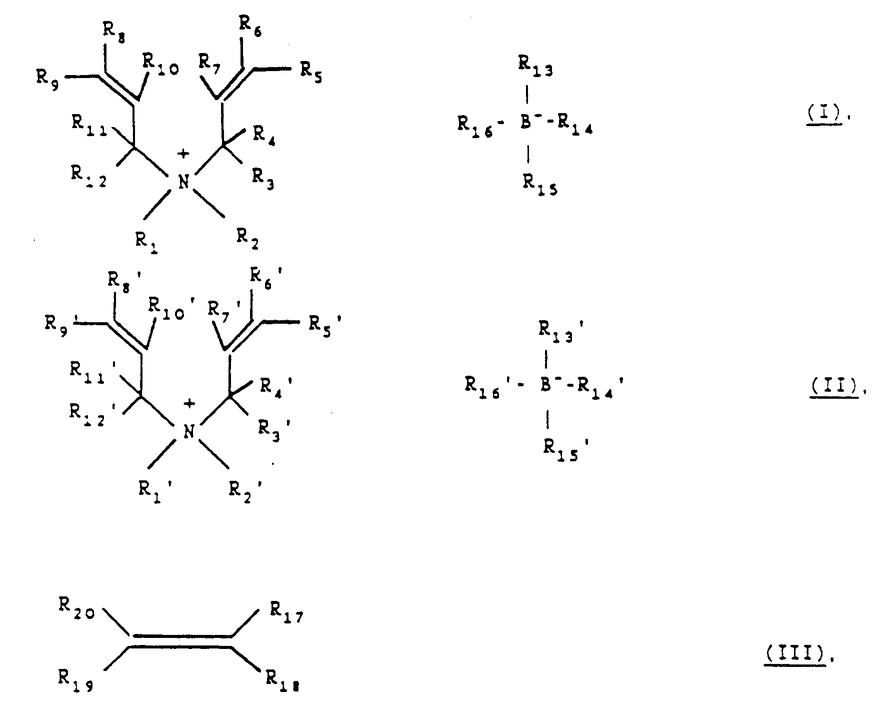 in which the radicals R₁ to R₁₆ and R₁' to R₁₆', independently of one another, are each a hydrogen atom, halogen atom, a hydroxyl radical, a primary, secondary or tertiary amino radical, a carboxyl or carboxylic ester radical, a sulfo or sulfonic ester radical, a cyano or nitro radical or are each a radical based on a hydrocarbon which may be interrupted by heteroatoms, and the radicals R₁₇ to R₂₀, independently of one another, are each a hydrogen atom, chlorine atom, bromine atom, a hydroxyl radical, a primary, secondary or tertiary amino radical, a carboxyl or carboxylic ester radical, a sulfo or sulfonic ester radical, a cyano or nitro radical or are each a radical based on a hydrocarbon which may be interrupted by heteroatoms, and mixtures of these compounds.

2. A polymeric ammonium borate as claimed in claim 1, wherein the radicals R₁ and R₂ or R₁' and R₂', independently of one another, are hydrogen atoms, straight-chain or branched, saturated or unsaturated alkyl(C₁-C₁₈), alkoxy(C₁-C₁₈) radicals, polyoxyalkylene radicals of the formula -(alkylene(C₁-C₅)-O)ₙ-R, in which R is a hydrogen atom, an alkyl(C₁-C₄) radical or an acyl radical and n is a number from 1 to 10, aryl or heteroaryl radicals, aralkyl, aralkoxy, alkaryl or cycloalkyl radicals, and R₁ and R₂ or R₁' and R₂' can also form a saturated or unsaturated, aromatic or non-aromatic 5- to 7-membered ring system, which may contain further heteroatoms and may be substituted and/or modified by fusing or bridging to give further ring systems, in which the radicals R₁ and R₂ or R₁' and R₂' may contain one or more heteroatoms, and may be substituted by halogen atoms, hydroxyl, carboxyl, sulfo, cyano, mercapto, carboxamide, sulfonamide, urethane, keto radicals, primary, secondary or tertiary amino radicals, nitro, ether, alkyl(C₁-C₃₀), alkoxy(C₁-C₃₀), aroxy, haloalkyl(C₁-C₃₀), haloalkoxy(C₁-C₃₀) or ester radicals.

3. A polymeric ammonium borate as claimed in at least one of claims 1 or 2, wherein the radicals R₃ to R₁₂ or R₃' to R₁₂', independently of one another, are hydrogen atoms, halogen atoms, straight-chain or branched, saturated or unsaturated alkyl(C₁-C₁₈), alkoxy(C₁-C₁₈) radicals, polyoxyalkylene radicals of the formula -(alkylene(C₁-C₅)-O)ₙ-R, in which R is a hydrogen atom, an alkyl(C₁-C₄) radical or an acyl radical and n is a number from 1 to 10, aryl or heteroaryl radicals, aralkyl, aralkoxy, aroxy, alkaryl or cycloalkyl radicals, and two of the radicals R₃ to R₁₂ or R₃' to R₁₂' can also form a saturated or unsaturated, aromatic or non-aromatic 5- to 7-membered ring system, which may contain further heteroatoms and may be substituted and/or modified by fusing or bridging to give further ring systems, in which the radicals R₃ and R₁₂ or R₃' and R₁₂' may contain one or more heteroatoms, and may be substituted by halogen atoms, hydroxyl, carboxyl, sulfo, cyano, mercapto, carboxamide, sulfonamide, urethane, keto radicals, primary, secondary or tertiary amino radicals, nitro, ether, alkyl(C₁-C₃₀), alkoxy(C₁-C₃₀), aroxy, haloalkyl(C₁-C₃₀), haloalkoxy(C₁-C₃₀) or ester radicals.

4. A polymeric ammonium borate as claimed in at least one of claims 1 to 3, wherein the radicals R₁₃ to R₁₆ or R₁₃' to R₁₆' on the borate anion, independently of one another, are aliphatic, cycloaliphatic radicals, aryl or heteroaryl radicals or aralkyl radicals, it being possible for these radicals to be substituted by alkyl-(C₁-C₄), alkoxy(C₁-C₄), aryl radicals or halogen atoms, or are fluorine atoms.

5. A polymeric ammonium borate as claimed in at least one of claims 1 to 4, wherein the radicals R₁₇ to R₂₀, independently of one another, are hydrogen atoms, chlorine atoms, bromine atoms, straight-chain or branched, saturated or unsaturated alkyl(C₁-C₃₀) radicals, polyoxyalkylene radicals of the formula - (alkylene(C₁-C₅)-O)ₙ-R, in which R is a hydrogen atom, an alkyl(C₁-C₄) radical or an acyl radical and n is a number from 1 to 10, aryl or heteroaryl radicals, aralkyl, aralkoxy, alkaryl or cycloalkyl radicals, carboxyl, sulfo, cyano, carboxamide, sulfonamide, ester, carboxylate, keto, lactam or ether radicals, in which the radicals R₁₇ to R₂₀ may contain one or more heteroatoms, and may be substituted by chlorine or bromine atoms, hydroxyl, carboxyl, sulfo, cyano, mercapto, carboxamide, sulfonamide radicals, primary, secondary or tertiary amino radicals or nitro radicals.

6. A polymeric ammonium borate as claimed in at least one of claims 1 to 5, wherein in the case of homopolymerization of monomers of the formula (I) or (II) R₁ and R₂ and/or R₁' and R₂' can be identical or different, and in the case of copolymerization of mixtures of two monomers of the formulae (I) to (III) it being possible for not only the radicals R₁ and R₂ and/or R₁' and R₂' but also the borate anions to be identical or different.

7. A polymeric ammonium borate as claimed in at least one of claims 1 to 6, wherein in the formulae (I) to (III) mentioned in claim 1 the radicals R₁ and R₂ or R₁' and R₂', independently of one another, are hydrogen atoms, alkyl(C₁-C₈), cyclopentyl, cyclohexyl, phenyl, naphthyl, pyridyl, benzyl, tolyl or methoxyphenyl radicals, it being possible for the radicals mentioned to be substituted by halogen atoms, hydroxyl, cyano, mercapto radicals, primary, secondary or tertiary amino radicals or nitro radicals, and the radicals R₃ to R₁₂ or R₃' to R₁₂', independently of one another, are hydrogen atoms, halogen atoms, alkyl(C₁-C₈), cyclopentyl, cyclohexyl, phenyl, naphthyl, pyridyl, benzyl, tolyl or methoxyphenyl radicals, it being possible for the radicals mentioned to be substituted by halogen atoms, hydroxyl, cyano, mercapto radicals, primary, secondary or tertiary amino radicals or nitro radicals, and the radicals R₁₃ to R₁₆ or R₁₃' to R₁₆' on the borate anion are phenyl, naphthyl, tolyl radicals or fluorine atoms, and the radicals R₁₇ to R₂₀, independently of one another, are hydrogen atoms, cyano, alkyl(C₁-C₈), cyclopentyl, cyclohexyl, phenyl, naphthyl, pyridyl, benzyl, tolyl, methoxyphenyl, carboxyl, sulfo, carboxamide, sulfonamide, ester or lactam radicals, it being possible for the radicals mentioned to be substituted by chlorine or bromine atoms, hydroxyl, cyano, mercapto radicals, primary, secondary or tertiary amino radicals or nitro radicals.

8. A homopolymer of 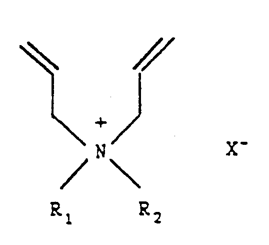 where X⁻ is BF₄⁻, B(phenyl)₄⁻, R₁ is H, CH₃, R₂ is CH₃, C₈H₁₇, having a molecular weight of 20,000 to 250,000.

9. A copolymer of 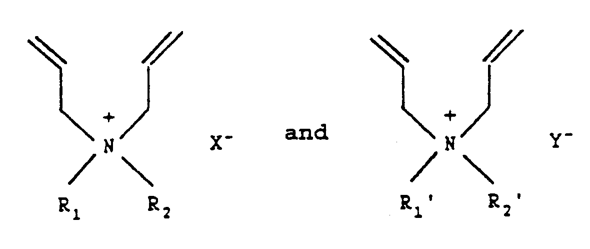 where X⁻ and Y⁻ are BF₄⁻, B(phenyl)₄⁻, R₁ and R₁' are H, CH₃, R₂ and R₂' are CH₃, C₈H₁₇, having a molecular weight of 20,000 to 250,000 and a molar monomer ratio in the copolymer of 0.5:0.5 to 0.95:0.05.

10. A copolymer of 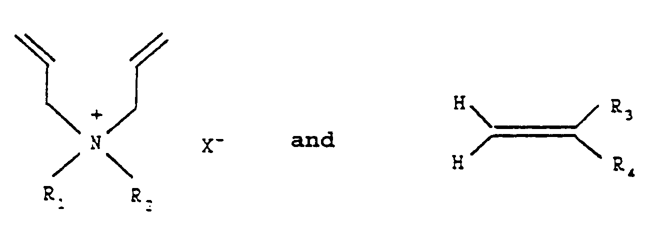 where X⁻ and Y⁻ are BF₄⁻, B(phenyl)₄⁻, R₁ is H, CH₃, R₂ is CH₃, C₈H₁₇, R₃ is H, CH₃, R₄ is COOH, C(O)OCH₃, C(O)OC₂H₅, C(O)NH₂, OC(O)CH₃, CN, having a molecular weight of 20,000 to 250,000 and a molar monomer ratio in the copolymer of 0.5:0.5 to 0.95:0.05.

11. A process for the preparation of a polymeric ammonium borate as claimed in claims 1 to 10, which comprises reacting polymer ammonium compounds obtained by homopolymerization of monomers of the formula (IV) or (V) and by copolymerization of mixtures of two monomers of the formulae (IV) to (VI) 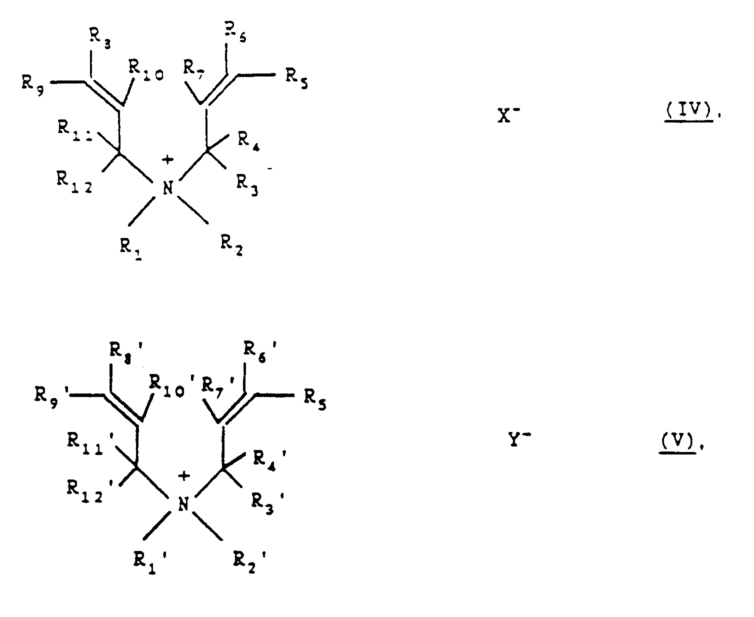 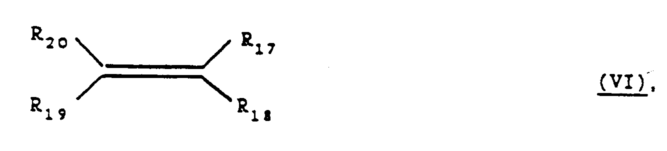 in which the radicals R₁ to R₁₂, R₁' to R₁₂' and R₁₇ to R₂₀ in the formulae (IV) to (VI) have the meanings given for the formulae (I) to (III) in claims 1 to 10 and the anions X⁻ and Y⁻ are Cl⁻, Br⁻, I⁻, CH₃OSO₃⁻ or C₂H₅OSO₃⁻ with one or more borate salts in water or mixtures of water and organic solvent at temperatures of 10°C to 90°C.

12. The process as claimed in claim 11, wherein the reaction is carried out in a mixture of water and isopropanol, isobutanol or methyl isobutyl ketone.

13. The process as claimed in at least one of claims 11 or 12, wherein the reaction is carried out with sodium tetraphenylborate, sodium tetra-o-fluorophenylborate, sodium tetra-m-fluorophenylborate, sodium tetra-p-fluorophenylborate, sodium tetra-o-chlorophenylborate, sodium tetra-m-chlorophenylborate, sodium tetra-p-chlorophenylborate, sodium tetra-o-tolylborate, sodium tetra-m-tolylborate, sodiumtetra-p-tolylborate, sodiumtetra-1-naphthylborate, sodium tetra-2-naphthylborate, sodium tetra-o-methoxyphenylborate, sodium tetra-m-methoxyphenylborate, sodium tetra-p-methoxyphenylborate, sodium tetra-o-biphenylborate, sodium tetra-m-biphenylborate, sodium tetra-p-biphenylborate, sodium tetrabenzylborate, sodium tetra-o-pyridylborate, sodium tetra-m-pyridylborate, sodium tetra-p-pyridylborate or sodium tetrafluoroborate.

## Revendications

1. Borates d'ammonium polymères ayant une masse moléculaire comprise entre 5 000 et 500 000 obtenus par homopolymérisation de monomères de formule générale (I) ou (II) et par copolymérisation de mélanges de deux monomères des formules générales (I) à (III), avec les rapports molaires de monomères (I):(II) et (I):(III) et (II):(III) compris entre 0,5:0,5 et 0,95:0,05 dans le copolymère, suivies éventuellement par un échange d'anions, 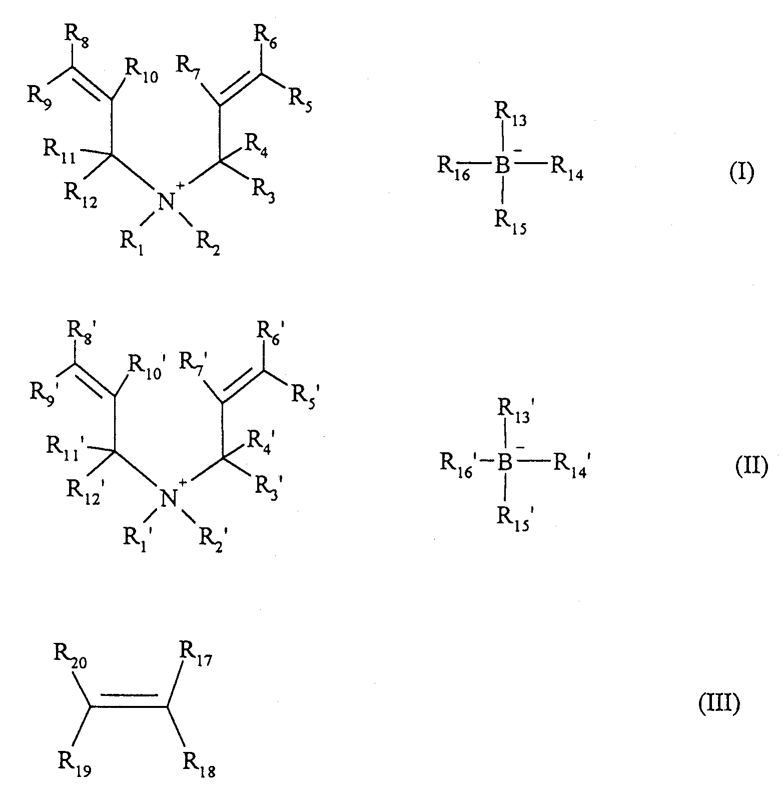 les restes R₁ à R₁₆ et R₁' à R₁₆' représentant chacun, indépendamment les uns des autres, un atome d'hydrogène, un atome d'halogène, un reste hydroxy, un reste amino primaire, secondaire ou tertiaire, un reste acide carboxylique ou ester d'acide carboxylique, un reste acide sulfonique ou ester d'acide sulfonique, un reste cyano ou un reste nitro ou un reste à base d'un hydrocarbure pouvant être interrompu par des hétéroatomes, et les restes R₁₇ à R₂₀ représentant chacun, indépendamment les uns des autres, un atome d'hydrogène, un atome de chlore, un atome de brome, un reste hydroxy, un reste amino primaire, secondaire ou tertiaire, un reste acide carboxylique ou ester d'acide carboxylique, un reste acide sulfonique ou ester d'acide sulfonique, un reste cyano ou un reste nitro ou un reste à base d'un hydrocarbure pouvant être interrompu par des hétéroatomes, et les mélanges de ces composés.

2. Borates d'ammonium polymères selon la revendication 1, caractérisés en ce que les restes R₁ et R₂, et R₁' et R₂' représentant indépendamment les uns des autres des atomes d'hydrogène, des restes alkyle en C₁-C₁₈ ou alcoxy en C₁-C₁₈ linéaires ou ramifiés, saturés ou insaturés, des restes polyoxyalkylène de formule générale -[(alkylène en C₁-C₅)-O]ₙ-R, dans laquelle R représente un atome d'hydrogène, un reste alkyle en C₁-C₄ ou un reste acyle et n est un nombre de 1 à 10, des restes aryle ou hétéroaryle, des restes aralkyle, aralcoxy, alkaryle ou cycloalkyle, et R₁ et R₂, respectivement R₁' et R₂' peuvent aussi se combiner pour former un système cyclique saturé ou insaturé, aromatique ou non aromatique de 5 à 7 chaînons qui peut contenir d'autres hétéroatomes, et qui peut être substitué et/ou modifié par des cycles condensés et/ou par pontage pour former d'autres systèmes cycliques, les restes R₁ et R₂, respectivement R₁' et R₂' pouvant contenir un ou plusieurs hétéroatomes et être substitués par des atomes d'halogène, des restes hydroxy, carboxy, acide sulfonique, cyano, mercapto, des restes carboxamide, sulfonamide, uréthane, céto, des restes amino primaires, secondaires ou tertiaires, des restes nitro, éther, alkyle en C₁-C₃₀, alcoxy en C₁-C₃₀, aryloxy, halogénalkyle en C₁-C₃₀, halogénoalcoxy en C₁-C₃₀ ou des restes ester.

3. Borates d'ammonium polymères selon l'une au moins des revendications 1 ou 2, caractérisés en ce que les restes R₃ à R₁₂, et R₃' à R₁₂' représentant indépendamment les uns des autres des atomes d'hydrogène, des atomes d'halogène, des restes alkyle en C₁-C₁₈ ou alcoxy en C₁-C₁₈ linéaires ou ramifiés, saturés ou insaturés, des restes polyoxyalkylène de formule générale -[(alkylène en C₁-C₅)-O]ₙ-R, dans laquelle R représente un atome d'hydrogène, un reste alkyle en C₁-C₄ ou un reste acyle et n est un nombre de 1 à 10, des restes aryle ou hétéroaryle, des restes aralkyle, aralcoxy, aryloxy, alkaryle ou cycloalkyle, et deux des restes R₃ à R₁₂, respectivement R₃' à R₁₂' peuvent aussi se combiner pour former un système cyclique saturé ou insaturé, aromatique ou non aromatique de 5 à 7 chaînons qui peut contenir d'autres hétéroatomes et qui peut être substitué et/ou modifié par des cycles condensés et/ou par pontage pour former d'autres systèmes cycliques, les restes R₃ et R₁₂, respectivement R₃' et R₁₂' pouvant contenir un ou plusieurs hétéroatomes et être substitués par des atomes d'halogène, des restes hydroxy, carboxy, acide sulfonique, cyano, mercapto, carboxamide, sulfonamide, uréthane, céto, des restes amino primaires, secondaires ou tertiaires, des restes nitro, éther, alkyle en C₁-C₃₀, alcoxy en C₁-C₃₀, aryloxy, halogénalkyle en C₁-C₃₀, halogénoalcoxy en C₁-C₃₀ ou ester.

4. Borates d'ammonium polymères selon l'une au moins des revendications 1 à 3, caractérisés en ce que les restes R₁₃ à R₁₆ et R₁₃' à R₁₆' sur l'anion borate représentent indépendamment les uns des autres des restes aliphatiques, cycloaliphatiques, des restes aryle ou hétéroaryle ou des restes aralkyle, ces restes pouvant être substitués par des restes alkyle en C₁-C₄, alcoxy en C₁-C₄, aryle ou des atomes d'halogène, ou des atomes de fluor.

5. Borates d'ammonium polymères selon l'une au moins des revendications 1 à 4, caractérisés en ce que les restes R₁₇ à R₂₀ représentant indépendamment les uns des autres des atomes d'hydrogène, des atomes de chlore, des atomes de brome, des restes alkyle en C₁-C₃₀ linéaires ou ramifiés, saturés ou insaturés, des restes polyoxyalkylène de formule générale -[(alkylène en C₁-C₅)-O]ₙ-R, dans laquelle R représente un atome d'hydrogène, un reste alkyle en C₁-C₄ ou un reste acyle et n est un nombre de 1 à 10, des restes aryle ou hétéroaryle, des restes aralkyle, aralcoxy, alkaryle ou cycloalkyle, des restes carboxy, acide sulfonique, cyano, carboxamide, sulfonamide, ester, carboxylate, céto, lactame ou éther, les restes R₁₇ à R₂₀ pouvant contenir un ou plusieurs hétéroatomes et être substitués par des atomes de chlore ou de brome, des restes hydroxy, carboxy, acide sulfonique, cyano, mercapto, carboxamide, sulfonamide, des restes amino primaires, secondaires ou tertiaires ou des restes nitro.

6. Borates d'ammonium polymères selon l'une au moins des revendications 1 à 5, caractérisés en ce que, dans le cas de l'homopolymérisation de monomères de formule générale (I) ou (II), R₁ et R₂ et/ou R₁' et R₂' peuvent être identiques ou différents, et, dans le cas de la copolymérisation de mélanges de deux monomères des formules (I) à (III), les restes R₁ et R₂ et/ou R₁' et R₂', tout comme les anions borate, peuvent être identiques ou différents.

7. Borates d'ammonium polymères selon l'une au moins des revendications 1 à 6, caractérisés en ce que, dans les formules (I) à (III) citées dans la revendication 1, les restes R₁ et R₂, et R₁' et R₂' représentent indépendamment les uns des autres des atomes d'hydrogène, des restes alkyle en C₁-C₈, cyclopentyle, cyclohexyle, phényle, naphtyle, pyridyle, benzyle, tolyle ou méthoxyphényle, lesdits restes pouvant être substitués par des atomes d'halogène, des restes hydroxy, cyano, mercapto, des restes amino primaires, secondaires ou tertiaires ou des restes nitro,
et les restes R₃ à R₁₂, et R₃' à R₁₂' représentent indépendamment les uns des autres des atomes d'hydrogène, des atomes d'halogène, des restes alkyle en C₁-C₈, cyclopentyle, cyclohexyle, phényle, naphtyle, pyridyle, benzyle, tolyle ou méthoxyphényle, lesdits restes pouvant être substitués par des atomes d'halogène, des restes hydroxy, cyano, mercapto, des restes amino primaires, secondaires ou tertiaires ou des restes nitro,
et les restes R₁₃ à R₁₆ et R₁₃' à R₁₆' sur l'anion borate représentent des restes phényle, naphtyle, tolyle ou des atomes de fluor,
et les restes R₁₇ à R₂₀ représentent indépendamment les uns des autres des atomes d'hydrogène, des restes cyano, alkyle en C₁-C₈, cyclopentyle, cyclohexyle, phényle, naphtyle, pyridyle, benzyle, tolyle, méthoxyphényle, carboxy, acide sulfonique, carboxamide, sulfonamide, ester ou lactame, lesdits restes pouvant être substitués par des atomes de chlore ou de brome, des restes hydroxy, cyano, mercapto, des restes amino primaires, secondaires ou tertiaires ou des restes nitro.

8. Homopolymères de 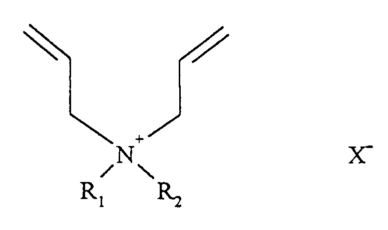 avec X⁻ = BF₄⁻, B(phényle)₄⁻, R₁ = H, CH₃, R₂ = CH₃, C₈H₁₇ et avec une masse moléculaire de 20 000 à 250 000.

9. Copolymères de 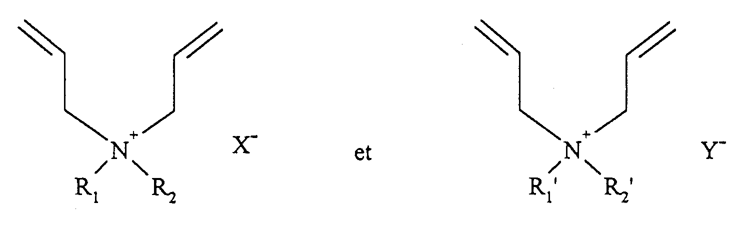 avec X⁻ et Y⁻ = BF₄⁻, B(phényle)₄⁻, R₁ et R₁' = H, CH₃, R₂ et R₂' = CH₃, C₈H₁₇, une masse moléculaire de 20 000 à 250 000 et un rapport molaire des monomères dans le copolymère compris entre 0,5:0,5 et 0,95:0,05.

10. Copolymères de 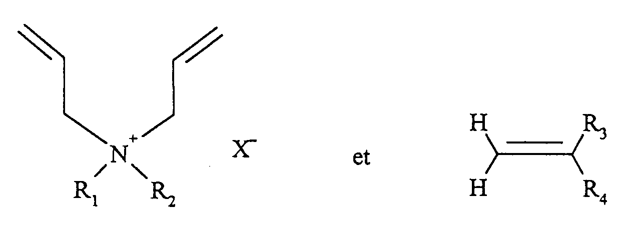 avec X⁻ et Y⁻ = BF₄⁻, B(phényle)₄⁻, R₁ = H, CH₃, R₂ = CH₃, C₈H₁₇, R₃ = H, CH₃, R₄ = COOH, C(O)OCH₃, C(O)OC₂H₅, C(O)NH₂, OC(O)CH₃, CN, une masse moléculaire de 20 000 à 250 000 et un rapport molaire des monomères dans le copolymère compris entre 0,5:0,5 et 0,95:0,05.

11. Procédé de préparation de borates d'ammonium polymères selon les revendications 1 à 10, caractérisé en ce que l'on fait réagir des composés d'ammonium polymères obtenus par homopolymérisation de monomères de formule générale (IV) ou (V) et par copolymérisation de mélanges de deux monomères des formules générales (IV) à (VI) 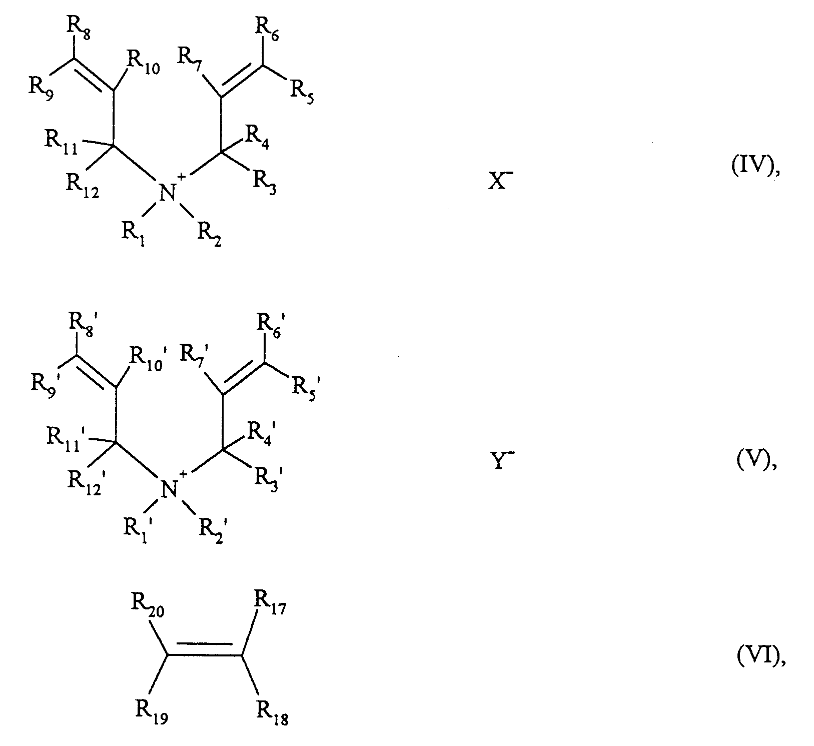 les restes R₁ à R₁₂, R₁' à R₁₂' et R₁₇ à R₂₀ dans les formules générales (IV) à (VI) ayant les significations données pour les formules générales (I) à (III) dans les revendications 1 à 10, et les anions X⁻ et Y⁻ représentant Cl⁻, Br⁻, I⁻, CH₃OSO₃⁻ ou C₂H₅OSO₃⁻,
avec un ou plusieurs borates dans l'eau ou des mélanges d'eau et de solvants organiques à des températures de 10°C à 90°C.

12. Procédé selon la revendication 11, caractérisé en ce que l'on effectue la réaction dans un mélange d'eau et d'isopropanol, d'isobutanol ou de méthylisobutylcétone.

13. Procédé selon l'une au moins des revendications 11 ou 12, caractérisé
en ce que l'on effectue la réaction avec du tétraphénylborate de sodium, du tétra(o-fluorophényl)borate de sodium, du tétra(m-fluorophényl)borate de sodium, du tétra(p-fluorophényl)borate de sodium, du tétra(o-chlorophényl)borate de sodium, du tétra(m-chlorophényl)borate de sodium, du tétra(p-chlorophényl)borate de sodium, du tétra(o-tolyl)borate de sodium, du tétra(m-tolyl)borate de sodium, du tétra(p-tolyl)borate de sodium, du tétra(1-naphtyl)borate de sodium, du tétra(2-naphtyl)borate de sodium, du tétra(o-méthoxyphényl)borate de sodium, du tétra-(m-méthoxyphényl)borate de sodium, du tétra(p-méthoxyphényl)borate de sodium, du tétra(o-biphényl)borate de sodium, du tétra(m-biphényl)borate de sodium, du tétra(p-biphényl)borate de sodium, du tétrabenzylborate de sodium, du tétra(o-pyridyl)borate de sodium, du tétra(m-pyridyl)borate de sodium, du tétra(p-pyridyl)borate de sodium ou du tétrafluoroborate de sodium.
